# FASCICULE DE BREVET EUROPEEN

(11) **EP 4 142 169 B1**
(45) Date de publication et mention de la délivrance du brevet: **24.09.2025**
(21) Numéro de dépôt: 22191154.8
(22) Date de dépôt: 19.08.2022
(51) Int. Cl.: H04B 3/58, H04B 3/54, H04W 40/02

(54) **PROCÉDÉ DE TRANSMISSION ET DISPOSITIF NOEUD IMPLEMENTANT LEDIT PROCÉDÉ**
ÜBERTRAGUNGSVERFAHREN UND KNOTENVORRICHTUNG FÜR DIE IMPLEMENTIERUNG DIESES VERFAHRENS
TRANSMISSION METHOD AND NODE DEVICE IMPLEMENTING SAID METHOD

(30) Priorité: 26.08.2021 FR 2108916
(43) Date de publication de la demande: 01.03.2023
(73) Titulaire: Sagemcom Energy & Telecom SAS, 92270 Bois-Colombes (FR)
(72) Inventeur: BAROIS, Jérôme, 92500 RUEIL MALMAISON (FR); JUAN, Guillaume, 92500 RUEIL MALMAISON (FR)
(74) Mandataire: Cabinet Le Guen Maillet

(56) Documents cités:
- US-A1- 2011 058 614
- US-A1- 2014 328 355
- US-A1- 2015 023 369
- ANIL MENGI G3-PLC ALLIANCE GERMANY: "Narrowband OFDM PLC specifications for G3-PLC networks;C09R1", vol. 18/15, 18 March 2021 (2021-03-18), pages 1 - 277, XP044307268, Retrieved from the Internet <URL:https://www.itu.int/ifa/t/2017/sg15/docs/rgm/Q18-210308/C/T17-SG15RGM-Q18-210308-C-0009-R01.docx> [retrieved on 20210318]

## Description

### DOMAINE TECHNIQUE

Au moins un mode de réalisation concerne un procédé de transmission pour transmettre un paquet IP à partir d'un premier dispositif nœud vers un second dispositif nœud appartenant à un voisinage réseau dudit premier dispositif nœud, lesdits premier et second dispositifs nœuds appartenant à un réseau d'alimentation électrique et étant configurés pour transmettre ledit paquet IP par courants porteurs en ligne et par radio-fréquences. Au moins un mode de réalisation concerne un dispositif nœud implémentant ledit procédé de transmission.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif nœud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs nœuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Dans une évolution de la norme G3-PLC définie dans une Annexe H de la recommandation ITU-T G.9903 (2017) Amendement 1 (05/2021), appelée G3-PLC Hybrid PLC & RF, un canal RF (acronyme de radio-fréquences) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents média G3-PLC et RF pour transmettre des données, le réseau d'alimentation électrique maximise sa couverture et sa résilience. Un dispositif nœud réseau d'alimentation électrique capable d'émettre et de recevoir des données en utilisant les deux média (PLC et RF) est appelé nœud hybride.

Le document « Narrowband OFDM PLC specifications for G3-PLC networks; C09R1 », ANIL MENGI G3-PLC Alliance Germany, décrit l'utilisation d'une transmission hybride par courants porteurs en ligne et par radio-fréquences entre deux dispositifs nœuds d'un réseau d'alimentation électrique.

Le document US 2011/058614 A1 décrit un procédé permettant de maintenir la connectivité d'un réseau sur des lignes électriques. Cette connectivité de réseau est maintenue même si divers clients sont couverts par différents réseaux de lignes électriques ou si une ou plusieurs lignes électriques d'un réseau ne sont pas disponibles pour transmettre des données.

Le document US 2015/023369 A1 décrit un procédé permettant d'améliorer l'efficacité de demandes de répétition automatique dans des réseaux comprenant des dispositifs avec de multiples interfaces de communication.

Le document US 2014/328355 A1 décrit un dispositif de communication comportant une unité de transmission/réception configurée pour se conformer à une pluralité de méthodes de communication et une unité de traitement de communication qui sélectionne un procédé de communication d'une pluralité de procédés de communication afin d'effectuer une communication via l'unité d'émission/réception.

Toutefois, dans G3-PLC Hybrid PLC & RF, le choix de communiquer entre deux nœuds hybrides du réseau de communication soit par courants porteurs en ligne sur une bande fréquentielle PLC soit par radio-fréquences sur un canal RF est déterminé au moment de la construction ou de la reconstruction des routes de communication. Ce choix du médium de communication utilisé entre deux nœuds hybrides du réseau est généralement fixe pendant plusieurs heures. Ainsi, les messages unicast sont transmis entre lesdits deux nœuds hybrides pendant cette durée soit sur une bande fréquentielle PLC soit sur un canal RF en fonction du choix effectué au moment de la construction ou reconstruction de route. La norme G3-PLC Hybrid PLC & RF définie dans l'Amendement 1 (05/2021) ne permet donc pas d'utiliser toute la flexibilité offerte par l'hybridation PLC/RF.

Il est souhaitable de pallier ces différents inconvénients de l'état de la technique. Il est notamment souhaitable de proposer un procédé de transmission qui permette de sélectionner le médium de communication entre PLC et RF de manière dynamique.

### EXPOSE DE L'INVENTION

Au moins un mode de réalisation concerne un procédé de transmission pour transmettre un paquet IP à partir d'un premier dispositif nœud vers un second dispositif nœud appartenant à un voisinage réseau dudit premier dispositif nœud. Les premier et second dispositifs nœuds appartiennent à un réseau d'alimentation électrique et sont configurés pour transmettre ledit paquet IP par courants porteurs en ligne et par radio-fréquences. Une utilisation de la transmission par radio-fréquences est limitée, au niveau de chaque dispositif nœud, à un temps d'utilisation maximal sur une fenêtre temporelle glissante. Le procédé de transmission comprend les étapes suivantes mises en œuvre par ledit premier dispositif nœud dans le cas où ledit paquet IP n'est pas fragmenté :
- transmettre ledit paquet IP par radio-fréquences dans le cas où un taux d'utilisation par le premier dispositif nœud de la transmission par radio-fréquences calculé sur la fenêtre temporelle glissante par rapport audit temps d'utilisation maximal est inférieur à un premier seuil, ledit premier seuil étant inférieur à un second seuil au-delà duquel toute transmission par radio-fréquences est interrompue ;
- transmettre ledit paquet IP par courants porteurs en ligne sinon et, dans le cas où ladite transmission par courants porteurs en ligne échoue, transmettre le paquet IP par radio-fréquences dans le cas où ledit taux d'utilisation est inférieur audit second seuil.

Le procédé de transmission permet de sélectionner le médium de communication de manière dynamique. En effet, le choix du médium de communication se fait au niveau de chaque paquet IP et plus uniquement au moment de la construction ou reconstruction de route.

Dans un mode de réalisation particulier, le procédé de transmission comprend en outre les étapes suivantes mises en œuvre par ledit premier dispositif nœud dans le cas où ledit paquet IP est fragmenté en une pluralité de fragments comprenant au moins des premier et second fragments :
- transmettre les fragments de ladite pluralité de fragments par courants porteurs en ligne dans le cas où ledit taux d'utilisation est supérieur à un troisième seuil, ledit troisième seuil étant supérieur audit premier seuil et inférieur audit second seuil ; et sinon
- transmettre ledit premier fragment en utilisant un médium de communication parmi les courants porteurs en ligne et les radio-fréquences et transmettre ledit second fragment en utilisant l'autre desdits média de communication ;
- dans le cas où il reste des fragments à transmettre, répéter les étapes suivantes :
   o dans le cas où ledit taux d'utilisation est inférieur audit troisième seuil et où un acquittement a été reçu sur un médium de communication, transmettre un prochain fragment de ladite pluralité de fragments en utilisant ledit médium de communication sur lequel ledit acquittement a été reçu ;
   o transmettre ledit prochain fragment par courant porteur en ligne sinon.

Dans un mode de réalisation, ledit taux d'utilisation est égal à tps/macDutyCycleLimit_RF*100, où macDutyCycleLimit_RF est ledit temps d'utilisation maximal sur la fenêtre glissante et tps est le temps d'utilisation par le dispositif nœud de la transmission par radio-fréquences sur la fenêtre temporelle glissante.

Dans un mode de réalisation, ledit paquet IP est fragmenté conformément au protocole 6LowPAN.

Dans un mode de réalisation, dans le cas où le paquet IP est transmis par courants porteurs en ligne, ledit paquet IP est transmis sur au moins une bande fréquentielle appartenant à un ensemble de bandes fréquentielles comprenant :
- la bande fréquentielle CENELEC A;
- la bande fréquentielle CENELEC B; et
- la bande fréquentielle FCC ou la bande fréquentielle ARIB.

Dans un mode de réalisation, dans le cas où le paquet IP est transmis par radio-fréquences, ledit paquet IP est transmis sur une bande fréquentielle allant de 863 MHz à 870 MHz.

Au moins un autre mode de réalisation concerne un dispositif nœud appartenant à un réseau d'alimentation électrique, ledit dispositif nœud étant configuré pour transmettre un paquet IP par courants porteurs en ligne et par radio-fréquences à un autre nœud dudit réseau d'alimentation électrique appartenant à son voisinage réseau. Une utilisation de la transmission par radio-fréquences est limitée, au niveau dudit dispositif nœud, à un temps d'utilisation maximal sur une fenêtre temporelle glissante. Le dispositif nœud comprend des moyens de transmissions configurés pour, dans le cas où ledit paquet IP n'est pas fragmenté :
- transmettre ledit paquet IP par radio-fréquences dans le cas où un taux d'utilisation par le premier dispositif nœud de la transmission par radio-fréquences calculé sur la fenêtre temporelle glissante par rapport audit temps d'utilisation maximal est inférieur à un premier seuil, ledit premier seuil étant inférieur à un second seuil au-delà duquel toute transmission par radio-fréquences est interrompue ;
- transmettre ledit paquet IP par courants porteurs en ligne sinon et, dans le cas où ladite transmission par courants porteurs en ligne échoue, transmettre le paquet IP par radio-fréquences dans le cas où ledit taux d'utilisation est inférieur audit second seuil.

Dans un mode de réalisation particulier, lesdits moyens de transmission sont en outre configurés pour dans le cas où ledit paquet IP est fragmenté en une pluralité de fragments comprenant au moins des premier et second fragments :
- transmettre les fragments de ladite pluralité de fragments par courants porteurs en ligne dans le cas où ledit taux d'utilisation est supérieur à un troisième seuil, ledit troisième seuil étant supérieur audit premier seuil et inférieur audit second seuil ; et sinon
- transmettre ledit premier fragment en utilisant un médium de communication parmi les courants porteurs en ligne et les radio-fréquences et transmettre ledit second fragment en utilisant l'autre desdits média de communication ;
- dans le cas où il reste des fragments à transmettre, répéter les étapes suivantes :
   o dans le cas où ledit taux d'utilisation est inférieur audit troisième seuil et où un acquittement a été reçu sur un médium de communication, transmettre un prochain fragment de ladite pluralité de fragments en utilisant ledit médium sur lequel ledit acquittement a été reçu ;
   o transmettre ledit prochain fragment par courant porteur en ligne sinon.

Un produit programme d'ordinateur est également décrit qui comprend des instructions pour mettre en œuvre le procédé de transmission selon l'un quelconque des modes de réalisation décrits précédemment, lorsque ledit programme est exécuté par un processeur.

Un support de stockage est également décrit qui stocke un programme d'ordinateur comprenant des instructions pour mettre en œuvre le procédé de transmission selon l'un des modes de réalisation décrits précédemment, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication maillé ;
[Fig. 2] illustre schématiquement les différentes couches d'un modèle OSI dans le cas particulier de la norme G3-PLC Hybrid PLC & RF ;
[Fig. 3] illustre schématiquement un procédé de transmission d'un paquet IP court selon un mode de réalisation particulier ;
[Fig. 4] illustre schématiquement un procédé de transmission d'un paquet IP long selon un mode de réalisation particulier ; et,
**[****Fig. 5****]** illustre schématiquement un exemple d'architecture matérielle d'un dispositif nœud du réseau de communication maillé selon un mode de réalisation particulier.

### EXPOSE DETAILLE DE MODES DE REALISATION

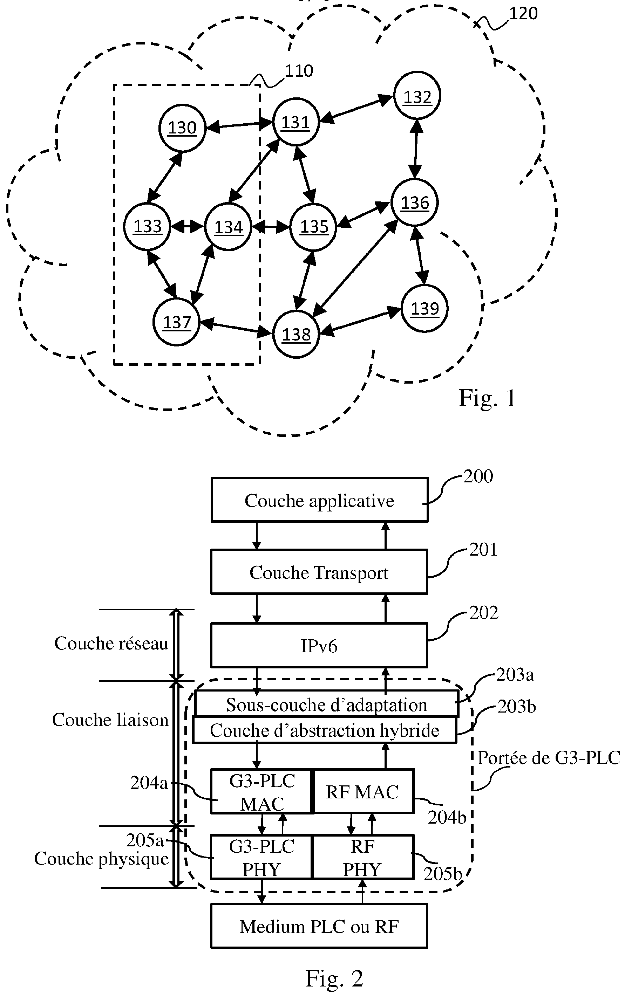

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC ou par radio-fréquences RF pour permettre à un dispositif nœud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs nœuds du réseau de communication maillé 120. Le réseau de communication maillé 120 peut comporter d'autres dispositifs nœuds, par exemple installés au niveau de transformateurs électriques. Le réseau de communication 120 a donc une structure maillée, telle que représentée schématiquement sur la Fig. 1 grâce à des flèches, où des dispositifs nœuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Le réseau de communication maillé 120 comporte ainsi une pluralité de dispositifs nœuds 130, 131, 132, 133, 134, 135, 136, 137, 138, 139. A chaque dispositif nœud du réseau de communication maillé 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message diffusé par un dispositif nœud (tel que le dispositif nœud 133) n'est en général pas visible en tout point dudit réseau de communication. Chaque dispositif nœud émetteur de signaux ou de messages dispose alors d'un voisinage réseau, c'est-à-dire d'un sous-ensemble dudit réseau de communication maillé 120 dans lequel tout dispositif nœud peut recevoir de manière intelligible lesdits signaux ou messages directement en provenance du dispositif nœud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Generation » en anglais). Contrairement aux protocoles de routage de type proactif qui s'appuient sur une connaissance globale de topologie réseau, les protocoles de routage de type réactif s'appuient sur des découvertes de routes à la demande, chaque dispositif nœud du réseau ayant alors besoin uniquement d'avoir connaissance de son propre voisinage réseau pour router des données dans le réseau de communication maillé 120.

Pour découvrir une route appropriée dans le réseau de communication maillé 120 depuis un dispositif nœud source (par exemple le dispositif nœud 133) jusqu'à un dispositif nœud destination (par exemple le dispositif nœud 132), il est connu que le dispositif nœud source diffuse (« broadcast » en anglais) une requête de découverte de route, appelée RREQ (« Route REQuest » en anglais). Dans le cas G3-PLC Hybrid PLC & RF, la requête RREQ est diffusée sur les deux média PLC et RF. Cette requête de découverte de route est reçue par chaque dispositif nœud dans le voisinage réseau dudit dispositif nœud source. Chaque dispositif nœud dans le voisinage réseau dudit dispositif nœud source relaie, par diffusion, ladite requête si ledit dispositif nœud en question n'est pas le dispositif nœud destination. Par diffusion de proche en proche, plusieurs requêtes de découverte de route sont typiquement reçues par le dispositif nœud destination, chacune de ces requêtes ayant suivi un chemin différent dans le réseau de communication maillé 120.

Chaque dispositif nœud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif nœud du réseau de communication maillé 120. A chaque fois qu'un dispositif nœud génère un nouveau message, ledit dispositif nœud incrémente son compteur et inclut dans le message en question la valeur dudit compteur. Ainsi, lorsqu'un dispositif nœud reçoit un message, ledit dispositif nœud analyse l'identifiant du dispositif nœud à l'origine du message et le numéro de séquence inclus dans le message, et peut déterminer si le message reçu est effectivement un nouveau message ou une nouvelle copie d'un message déjà reçu.

Chaque dispositif nœud peut toutefois décider de ne pas relayer une requête de découverte de route, lorsqu'un ou plusieurs critères ne sont pas remplis. Notamment, avant de décider de relayer ladite requête, le dispositif nœud en question vérifie typiquement si ladite requête comporte une information représentative d'un coût de route, depuis le dispositif nœud source jusqu'au dispositif nœud en question, qui est meilleur que le coût de route représenté par une information contenue dans une autre requête de découverte de route précédemment reçue par le dispositif nœud en question. En d'autres termes, le dispositif nœud en question relaie, par diffusion, ladite requête si ladite requête concerne un chemin qui a suivi, depuis le dispositif nœud source jusqu'au dispositif nœud en question, un trajet de plus faible coût que toute autre requête précédemment reçue par le dispositif nœud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif nœud source. Selon un autre exemple, le coût de route est le résultat d'un calcul qui dépend de la bande passante des liens franchis par la requête en question depuis le dispositif nœud source et/ou de la qualité des liens de communication. Selon encore un autre exemple, le coût de route est proportionnel à la latence subie par la requête en question depuis le dispositif nœud source. D'autres métriques peuvent être utilisées pour établir un coût de route, c'est-à-dire un coût de transit, depuis le dispositif nœud source jusqu'au dispositif nœud destination. Selon encore un autre exemple, le coût de route dépend également du média, i.e. RF ou PLC, utilisé pour transmettre les données entre deux dispositifs nœuds successifs. Lorsqu'un dispositif nœud décide de relayer, par diffusion, une requête de découverte de route, le dispositif nœud en question met à jour l'information de coût de route contenue dans ladite requête, de manière à prendre en compte que ladite requête est passée par le dispositif nœud en question. Ainsi, selon un tel principe, plusieurs requêtes de découverte de route parviennent typiquement au dispositif nœud destination, chacune comportant une information de coût de route que ladite requête a suivie pour être propagée depuis le dispositif nœud source jusqu'au dispositif nœud destination. Le trajet emprunté par ladite requête de découverte de route associée au meilleur coût de route est ensuite sélectionné pour permettre au dispositif nœud source de transmettre des données au dispositif nœud destination. Pour activer la route en question, le dispositif nœud destination transmet une réponse de découverte de route, appelée RREP (« Route REPly » en anglais). Cette réponse de découverte de route est transmise de proche en proche en suivant le chemin inverse de la requête de découverte de route qui était associée au meilleur coût de route. Chaque dispositif nœud recevant la réponse de découverte de route met à jour une table de routage interne, au niveau de la couche liaison de données DLL, afin d'y indiquer que tout message ultérieur transmis en mode point-à-point (« unicast » en anglais) depuis le dispositif nœud source en question vers le dispositif nœud destination en question doit être transmis ou relayé vers tel ou tel dispositif nœud de son voisinage réseau. Au sein de la couche liaison, les tables de routage sont préférentiellement implémentées dans une sous-couche d'adaptation en charge de la mise en œuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre de la norme IEEE 802.15.4. A noter que le protocole 6LoWPAN s'appuie lui-même sur le protocole de routage de type réactif LOADng susmentionné. Une couche d'abstraction hybride (« Hybrid abstraction layer » en anglais) fournit des services appropriés à la sous-couche d'adaptation en vue d'envoyer/recevoir des données vers/de la sous-couche MAC adéquate (acronyme anglais de « Medium Access Control » en anglais), i.e. RF ou PLC. Grâce aux tables de routage ainsi configurées, des communications point-à-point (« unicast » en anglais) peuvent être effectuées par toute paire de dispositifs nœuds du réseau de communication maillé 120. Des dispositifs nœuds intermédiaires servent donc de relais lorsque les dispositifs nœuds de ladite paire ne sont pas dans le voisinage réseau l'un de l'autre, les communications s'opèrent ainsi de proche en proche, chaque dispositif nœud s'appuyant sur un de ses propres voisins pour faire suivre des messages jusqu'à leurs destinataires respectifs.

Pour communiquer entre dispositifs nœuds voisins (c'est-à-dire des dispositifs nœuds qui sont dans le voisinage réseau l'un de l'autre), les messages sont transmis sous forme de trames modulées. Lorsqu'une trame modulée est spécifiquement adressée à un dispositif nœud voisin et qu'elle est correctement démodulée par celui-ci, ledit dispositif nœud voisin retransmet un acquittement ACK au dispositif nœud qui lui a adressé ladite trame modulée sur la bande fréquentielle ou le canal RF sur lequel la trame modulée a été envoyée.

Plusieurs bandes fréquentielles et au moins un canal RF sont définis pour supporter la transmission de ces trames modulées, un schéma de modulation adapté étant associé à chacune de ces bandes fréquentielles et au canal RF. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon. Dans la suite du document, pour alléger le texte, le terme « bande fréquentielle » est utilisé indifféremment pour désigner une bande fréquentielle PLC ou un canal RF.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais) en PLC ou SUN-FSK (acronyme anglais de « Smart Utility Network - Frequency Shift Keying ») en RF.

En termes de bandes fréquentielles utilisables dans le cadre de la mise en œuvre du réseau de communication maillé 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz et la bande fréquentielle pour le canal RF qui va approximativement de 863 MHz à 870 MHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation de type SUN-FSK pour le canal RF de G3-PLC Hybrid PLC & RF. La modulation SUN-FSK est définie dans la section 20 du document IEEE 802.15.4 :2015.

La Fig. 2 illustre schématiquement les différentes couches d'un modèle OSI dans le cas particulier de la norme G3-PLC Hybrid PLC & RF telle que définie dans l'annexe H de la recommandation ITU-T G.9903 (2017) Amendement 1 (05/2021).

Un message à transmettre provenant d'une couche applicative 200 est transmis à une couche transport 201. La couche transport 201 regroupe l'ensemble des protocoles chargés de la gestion des erreurs et du contrôle des flux réseaux. Les deux principaux protocoles utilisés sont les protocoles TCP et UDP. La couche transport 201 crée des paquets en ajoutant des entêtes aux données en provenance de la couche applicative 200. Les paquets sont ensuite transmis à une couche IP 202, e.g. IPv6. La couche IP 202 encapsule les paquets en provenance de la couche transport 201 en ajoutant notamment un entête IP , e.g. IPv6. Un paquet IPv6 peut faire jusqu'à 1400 octets. Dans le cas où le paquet est de taille supérieure à une valeur de seuil, ce paquet est fragmenté en au moins deux fragments afin de l'adapter aux contraintes d'une sous-couche MAC 204a ou 204b, notamment à la taille des trames MAC. A cet effet, la norme G3-PLC Hybrid PLC & RF incorpore le protocole 6LoWPAN, lequel permet d'adapter des paquets de données IPv6 aux contraintes des sous-couches MAC 204a ou 204b, notamment en les fragmentant. En effet, les trames MAC utilisées sont de tailles bien inférieures (400 octets maximum disponibles par paquet pour la partie IP) aux paquets IPv6 de 1 400 octets.

Une sous-couche adaptation 203a incorporant le protocole 6LoWPAN et située entre la couche réseau IP 202 et la sous-couche MAC 204a ou 204b du modèle OSI reçoit de la couche réseau IP 202 des paquets IPv6 de 1 280 octets et le cas échéant les fragmente. Bien entendu, dans le cas d'un paquet IP suffisamment petit pour être contenu dans une seule trame MAC G3-PLC ou MAC RF aucune fragmentation n'est effectuée.

Une couche d'abstraction hybride 203b transfère ensuite le fragment ou le paquet IP en cas d'absence de fragmentation à la sous-couche MAC appropriée 204a ou 204b, en fonction du médium choisi pour sa transmission. Dans la suite, le terme fragment est utilisé pour désigner à la fois un fragment obtenu à partir d'un paquet IP fragmenté ou bien le paquet IP lui-même en cas d'absence de fragmentation.

La transmission d'un fragment sur le médium PLC, i.e. sur la ligne de courant, comprend classiquement différentes étapes notamment une segmentation des fragments afin de les adapter à une couche physique G3-PLC PHY 205a et une modulation OFDM du signal. La segmentation consiste à partitionner une trame MAC en PSDUs (acronyme anglais de « PHY Service Data Unit »). Tous les PSDU issus d'un même fragment sont modulés en utilisant un même schéma de modulation.

La transmission d'un fragment par radio-fréquences sur le canal RF comprend différentes étapes notamment une segmentation des fragments afin de les adapter à une couche physique RF PHY 205b et une modulation SUN-FSK du signal. Comme dans le cas PLC, la segmentation consiste à partitionner une trame MAC en PSDUs (acronyme anglais de « PHY Service Data Unit »). Tous les PSDU issus d'un même fragment sont modulés en utilisant un même schéma de modulation. La spécification de la couche physique RF PHY est donnée dans les sections 10, 11 et 20 de la norme IEEE 802.15.4-2015 telle que modifiée par le document IEEE 802.15.4v :2017 et complétée par la Table H-5-1 de la recommandation ITU-T G.9903 (2017) Amendement 1 (05/2021).

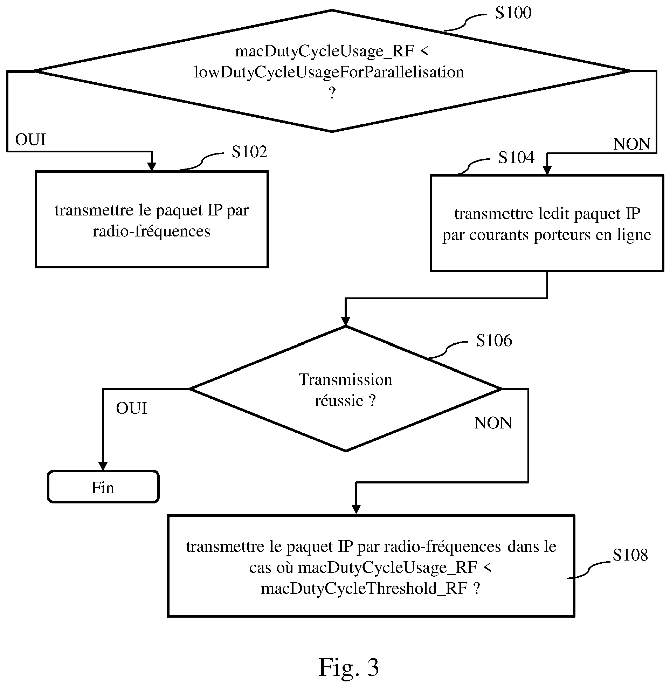

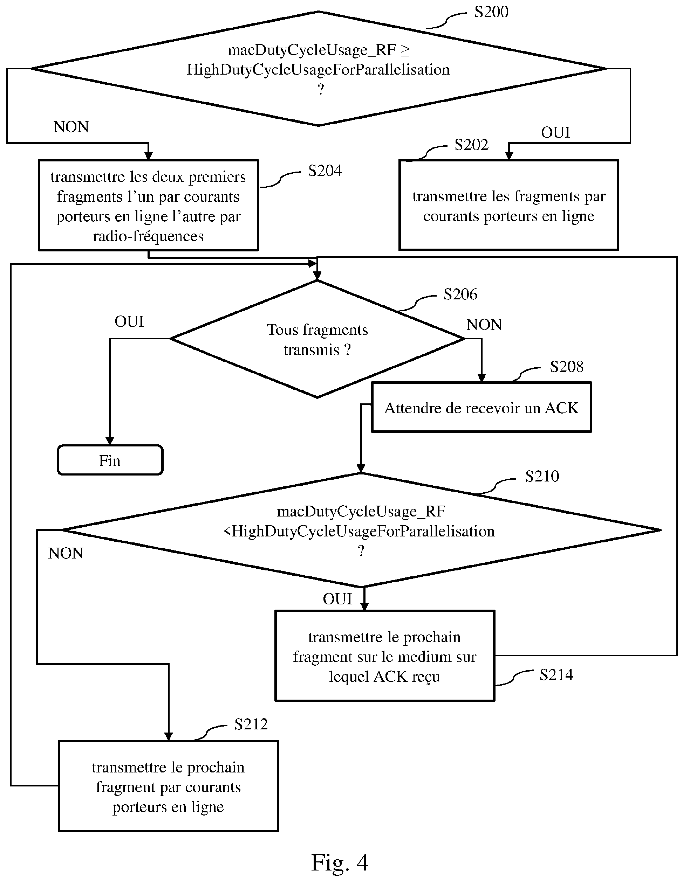

Il est à noter que la norme G3-PLC Hybrid PLC & RF impose à chaque dispositif nœud des contraintes sur le temps d'utilisation, sur une fenêtre temporelle glissante, de la transmission par radio-fréquences. Ces contraintes sont définies dans la Table H.6.8 de l'annexe H. A cet effet les valeurs suivantes sont définies au niveau de chaque dispositif nœud :
- macDutyCyclePeriod_RF : une première valeur prédéterminée qui définit une durée, e.g. en secondes, de la fenêtre temporelle glissante (par exemple, macDutyCyclePeriod_RF =3600s) ;
- macDutyCycleLimit_RF : une seconde valeur prédéterminée qui définit une limite absolue, e.g. en secondes, de temps d'utilisation autorisé de la transmission par radio-fréquences sur la fenêtre temporelle glissante (par exemple, macDutyCycleLimit_RF=90s pour les compteurs et macDutyCycleLimit_RF=360s pour le concentrateur de données) ;
- macDutyCycleThreshold_RF : une troisième valeur prédéterminée qui définit un seuil maximum de temps d'utilisation autorisé de la transmission par radio-fréquences au-delà duquel toute transmission par radio-fréquences est interrompue, e.g. exprimé en pourcents (par exemple, macDutyCycleThreshold_RF = 90%, ce qui signifie que les transmissions par radio-fréquences sont arrêtées lorsque l'on atteint 90% de 90 secondes sur les 3600 dernières secondes pour les compteurs, ou 90% de 360 secondes sur les 3600 dernières secondes pour le concentrateur de données) ;
- macDutyCycleUsage_RF : un taux d'utilisation de la transmission par radio-fréquences. Ce taux d'utilisation est calculé sur la fenêtre glissante par rapport à la seconde valeur prédéterminée, i.e. macDutyCycleLimit_RF. La recommandation ITU-T G.9903 (2017) Amendement 1 (05/2021) indique dans la table H.6.8 que macDutyCycleUsage_RF = tps/macDutyCycleLimit_RF*100 où tps est le temps courant d'utilisation de la transmission par radio-fréquences cumulé sur la fenêtre temporelle glissante par le dispositif nœud. Ce taux d'utilisation est par exemple mis à jour après chaque transmission par radio-fréquences. Afin d'utiliser toute la flexibilité offerte par l'hybridation PLC/RF tout en respectant les contraintes temporelles imposées à l'utilisation de la transmission par radio-fréquences, les procédés de transmission décrits en référence aux Figs. 3 et 4 sont mis en œuvre pour répartir les fragments fournis par la sous-couche d'adaptation 203a entre les deux couches MAC RF et MAC PLC de manière optimale. Plus précisément, les procédés décrits sont mis en œuvre au niveau de la couche d'abstraction hybride 203b.

La **Fig. 3** illustre schématiquement un procédé de transmission d'un paquet IP court, i.e. dont la taille est inférieure à la valeur de seuil, selon un mode particulier de réalisation. Dans ce mode de réalisation, le paquet IP à transmettre n'est pas fragmenté selon le protocole 6LowPAN car il est assez petit pour pouvoir être contenu dans une seule trame MAC. Lors d'une étape S100, macDutyCycleUsage_RF est comparé à lowDutyCycleUsageForParallelisation. Si macDutyCycleUsage_RF < low DutyCycleU sageForParallelisation, alors le procédé continue à l'étape S102, sinon il continue à l'étape S104. lowDutyCycleUsageForParallelisation est un seuil en dessous duquel on considère que la transmission par radio-fréquences a été très peu utilisée. Ce seuil est inférieur à macDutyCycleThreshold_RF. Par exemple, lowDutyCycleUsageForParallelisation= 0.5* macDutyCycleThreshold_RF.

Lors de l'étape S102, le paquet IP est transmis par radio-fréquences, i.e. en utilisant le médium RF. Lors de l'étape S104, le paquet IP est transmis par courants porteurs en ligne, i.e. en utilisant le médium PLC.

Lors d'une étape S106, le procédé détermine si la transmission par courants porteurs en ligne a réussi. En l'occurrence, la transmission a réussi si le dispositif nœud qui a transmis le paquet IP a reçu un acquittement ACK sur le médium PLC. L'acquittement ACK a été émis par le dispositif nœud ayant reçu le paquet IP. Si la transmission du paquet IP par courants porteurs en ligne a réussi, alors le procédé se termine. Sinon, le procédé continue à l'étape S108. Lors de l'étape S108, le paquet IP est transmis par radio-fréquences dans le cas où macDutyCycleUsage_RF < macDutyCycleThreshold_RF.

La **Fig. 4** illustre schématiquement un procédé de transmission d'un paquet IP long, i.e. dont la taille est supérieure à la valeur de seuil, selon un mode particulier de réalisation. Dans ce mode de réalisation, le paquet IP à transmettre est fragmenté selon le protocole 6LowPAN car il est trop grand pour pouvoir être contenu dans une seule trame MAC.

Lors d'une étape S200, macDutyCycleUsage_RF est comparé à HighDutyCycleUsageForParallelisation. Si macDutyCycleUsage_RF ≥ HighDutyCycleUsageForParallelisation, alors le procédé continue à l'étape S202, sinon il continue à l'étape S204. HighDutyCycleUsageForParallelisation est un seuil au-delà duquel on considère que la transmission par radio-fréquences a déjà été beaucoup utilisée. Ce seuil est inférieur à macDutyCycleThreshold_RF et supérieur à LowDutyCycleUsageForParallelisation. Par exemple, HighDutyCycleUsageForParallelisation =0.8* macDutyCycleThreshold_RF.

A l'étape S202, tous les fragments du paquet IP long sont transmis par courants porteurs en ligne, i.e. en utilisant le médium PLC.

A l'étape S204, les deux premiers fragments sont transmis, l'un par courants porteurs en ligne et l'autre par radio-fréquences. Par exemple, le premier fragment est transmis par courants porteurs en ligne et le second fragment est transmis par radio-fréquences ou vice-versa.

Lors d'une étape S206, le procédé détermine si tous les fragments ont été transmis. Si c'est le cas alors le procédé prend fin. Sinon, à l'étape S208, le dispositif nœud ayant transmis le fragment attend de recevoir un acquittement ACK sur l'un ou l'autre médium.

Lors d'une étape S210, macDutyCycleUsage_RF est comparé à HighDutyCycleUsageForParallelisation. Si macDutyCycleUsage_RF <HighDutyCycleUsageForParallelisation, alors le procédé continue à l'étape S214, sinon il continue à l'étape S212.

A l'étape S214, le prochain fragment à transmettre est transmis en utilisant le même médium que celui sur lequel l'acquittement a été reçu pour le fragment précédent. A l'étape S212, le prochain fragment est transmis par courants porteurs en ligne.

Les étapes S206 à S214 sont répétées tant qu'il reste des fragments à transmettre.

Les procédés décrits en lien avec les Figs 3 et 4 peuvent être utilisés indépendamment l'un de l'autre ou bien en combinaison. Ainsi, il est possible que les dispositifs nœuds du réseau implémentent le procédé décrit en lien avec la Fig. 3 sans implémenter celui en lien avec la Fig. 4 et vice-versa. Dans une variante, les dispositifs nœuds du réseau implémentent les deux procédés décrits en lien avec les Figs 3 et 4.

Grâce aux procédés décrits, les média PLC et RF peuvent être utilisés simultanément pour envoyer différents fragments d'un même paquet IP ou encore pour envoyer des paquets IP successifs. Ces procédés sont en outre définis de telle sorte que les contraintes de temps d'utilisation de la transmission par radio-fréquences mises en place dans la norme G3-PLC Hybrid PLC & RF soient respectées.

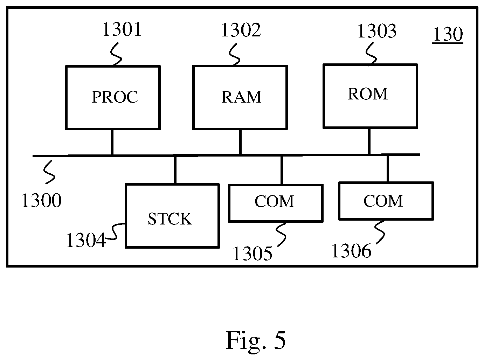

La **Fig. 5** illustre schématiquement un exemple d'architecture matérielle d'un dispositif nœud 130 du réseau de communication maillé 120 selon un mode de réalisation. Un tel dispositif nœud est par exemple un compteur ou un concentrateur de données.

Selon l'exemple d'architecture matérielle représenté à la Fig. 5, le dispositif nœud 130 comprend alors, reliés par un bus de communication 1300 : un processeur ou CPU (« Central Processing Unit » en anglais) 1301 ; une mémoire vive RAM (« Random Access Memory » en anglais) 1302; une mémoire morte ROM (« Read Only Memory » en anglais) 1303; une unité de stockage 1304 telle qu'un disque dur ou telle qu'un lecteur de support de stockage, e.g. un lecteur de cartes SD (« Secure Digital » en anglais); au moins une première interface de communication 1305 permettant au dispositif nœud 130 de communiquer avec les dispositifs nœuds appartenant à son voisinage réseau, e.g. les dispositifs nœuds 131 et 133 par courants porteurs en ligne et au moins une seconde interface de communication 1306 permettant au dispositif nœud 130 de communiquer avec les dispositifs nœuds appartenant à son voisinage réseau par radio-fréquences.

Le processeur 1301 est capable d'exécuter des instructions chargées dans la RAM 1302 à partir de la ROM 1303, d'une mémoire externe (non représentée), d'un support de stockage (tel qu'une carte SD), ou d'un réseau de communication. Lorsque le dispositif nœud est mis sous tension, le processeur 1301 est capable de lire de la RAM 1302 des instructions et de les exécuter. Ces instructions forment un programme d'ordinateur causant la mise en œuvre, par le processeur 1301, de tout ou partie des procédés décrits en relation avec les Figs. 3 et 4. Les procédés décrits en relation avec les Figs. 3 et 4 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif nœud 130 comprend de la circuiterie électronique configurée pour mettre en œuvre les procédés décrits en relation avec les Figs. 3 et 4.

## Revendications

1. Un procédé de transmission pour transmettre un paquet IP à partir d'un premier dispositif nœud vers un second dispositif nœud appartenant à un voisinage réseau dudit premier dispositif nœud, lesdits premier et second dispositifs nœuds appartenant à un réseau d'alimentation électrique et étant configurés pour transmettre ledit paquet IP par courants porteurs en ligne et par radio-fréquences, une utilisation de la transmission par radio-fréquences étant limitée, au niveau de chaque dispositif nœud, à un temps d'utilisation maximal, macDutyCycleLimit_RF, sur une fenêtre temporelle glissante, le procédé de transmission étant **caractérisé en ce qu'**il comprend les étapes suivantes mises en œuvre par ledit premier dispositif nœud dans le cas où ledit paquet IP n'est pas fragmenté :
- transmettre (S100, S102) ledit paquet IP par radio-fréquences dans le cas où un taux d'utilisation, macDutyCycleUsage_RF, par le premier dispositif nœud de la transmission par radio-fréquences calculé sur la fenêtre temporelle glissante par rapport audit temps d'utilisation maximal est inférieur à un premier seuil, ledit premier seuil étant inférieur à un second seuil, macDutyCycleThreshold_RF, au-delà duquel toute transmission par radio-fréquences est interrompue ;
- transmettre (S100, S104) ledit paquet IP par courants porteurs en ligne sinon et, dans le cas où ladite transmission par courants porteurs en ligne échoue, transmettre (S106, S108) le paquet IP par radio-fréquences dans le cas où ledit taux d'utilisation, macDutyCycleUsage_RF, est inférieur audit second seuil, macDutyCycleThreshold_RF.

2. Le procédé de transmission selon la revendication 1, comprenant en outre les étapes suivantes mises en œuvre par ledit premier dispositif nœud dans le cas où ledit paquet IP est fragmenté en une pluralité de fragments comprenant au moins des premier et second fragments :
- transmettre (S200, S202) les fragments de ladite pluralité de fragments par courants porteurs en ligne dans le cas où ledit taux d'utilisation, macDutyCycleUsage_RF, est supérieur à un troisième seuil, ledit troisième seuil étant supérieur audit premier seuil et inférieur audit second seuil ; et sinon
- transmettre (S200, S204) ledit premier fragment en utilisant un médium de communication parmi les courants porteurs en ligne et les radio-fréquences et transmettre ledit second fragment en utilisant l'autre desdits média de communication ;
- dans le cas où il reste des fragments à transmettre, répéter les étapes suivantes :
o dans le cas où ledit taux d'utilisation, macDutyCycleUsage_RF, est inférieur audit troisième seuil et où un acquittement a été reçu sur un médium de communication, transmettre (S206, S208, S214) un prochain fragment de ladite pluralité de fragments en utilisant ledit médium de communication sur lequel ledit acquittement a été reçu ;
o transmettre (S206, S208, S212) ledit prochain fragment par courant porteur en ligne sinon.

3. Le procédé selon la revendication 1 ou 2, dans lequel ledit taux d'utilisation, macDutyCycleUsage_RF, est égal à tps/macDutyCycleLimit_RF*100, où macDutyCycleLimit_RF est ledit temps d'utilisation maximal sur la fenêtre glissante et tps est le temps d'utilisation par le dispositif nœud de la transmission par radio-fréquences sur la fenêtre temporelle glissante.

4. Le procédé selon la revendication 2, dans lequel ledit paquet IP est fragmenté par une sous-couche d'adaptation incorporant le protocole 6LoWPAN.

5. Le procédé selon l'une quelconque des revendications 1 à 4, dans lequel dans le cas où le paquet IP est transmis par courants porteurs en ligne, ledit paquet IP est transmis sur au moins une bande fréquentielle appartenant à un ensemble de bandes fréquentielles comprenant :
- la bande fréquentielle CENELEC A;
- la bande fréquentielle CENELEC B; et
- la bande fréquentielle FCC ou la bande fréquentielle ARIB.

6. Le procédé selon l'une quelconque des revendications 1 à 4, dans lequel dans le cas où le paquet IP est transmis par radio-fréquences, ledit paquet IP est transmis sur une bande fréquentielle allant de 863 MHz à 870 MHz.

7. Un dispositif nœud appartenant à un réseau d'alimentation électrique, ledit dispositif nœud étant configuré pour transmettre un paquet IP par courants porteurs en ligne et par radio-fréquences à un autre nœud dudit réseau d'alimentation électrique appartenant à son voisinage réseau, une utilisation de la transmission par radio-fréquences étant limitée, au niveau dudit dispositif nœud, à un temps d'utilisation maximal, macDutyCycleLimit_RF, sur une fenêtre temporelle glissante, le dispositif nœud étant **caractérisé en ce qu'**il comprend des moyens de transmissions (1305, 1306) configurés pour, dans le cas où ledit paquet IP n'est pas fragmenté :
- transmettre ledit paquet IP par radio-fréquences dans le cas où un taux d'utilisation, macDutyCycleUsage_RF, par le premier dispositif nœud de la transmission par radio-fréquences calculé sur la fenêtre temporelle glissante par rapport audit temps d'utilisation maximal est inférieur à un premier seuil, ledit premier seuil étant inférieur à un second seuil macDutyCycleThreshold_RF, au-delà duquel toute transmission par radio-fréquences est interrompue ;
- transmettre ledit paquet IP par courants porteurs en ligne sinon et, dans le cas où ladite transmission par courants porteurs en ligne échoue, transmettre le paquet IP par radio-fréquences dans le cas où ledit taux d'utilisation, macDutyCycleUsage_RF, est inférieur audit second seuil, macDutyCycleThrehold_RF.

8. Le dispositif nœud selon la revendication 7, dans lequel lesdits moyens de transmission sont en outre configurés pour dans le cas où ledit paquet IP est fragmenté en une pluralité de fragments comprenant au moins des premier et second fragments :
- transmettre les fragments de ladite pluralité de fragments par courants porteurs en ligne dans le cas où ledit taux d'utilisation, macDutyCycleUsage_RF, est supérieur à un troisième seuil, ledit troisième seuil étant supérieur audit premier seuil et inférieur audit second seuil ; et sinon
- transmettre ledit premier fragment en utilisant un médium de communication parmi les courants porteurs en ligne et les radio-fréquences et transmettre ledit second fragment en utilisant l'autre desdits média de communication ;
- dans le cas où il reste des fragments à transmettre, répéter les étapes suivantes :
o dans le cas où ledit taux d'utilisation, macDutyCycleUsage_RF, est inférieur audit troisième seuil et où un acquittement a été reçu sur un médium de communication, transmettre un prochain fragment de ladite pluralité de fragments en utilisant ledit médium de communication sur lequel ledit acquittement a été reçu ;
o transmettre ledit prochain fragment par courant porteur en ligne sinon.

9. Un produit programme d'ordinateur **caractérisé en ce qu'**il comprend des instructions pour mettre en œuvre le procédé de transmission selon l'une quelconque des revendications 1 à 6, lorsque ledit programme est exécuté par un processeur.

10. Un support de stockage **caractérisé en ce qu'**il stocke un programme d'ordinateur comprenant des instructions pour mettre en œuvre le procédé de transmission selon l'une quelconque des revendications 1 à 6, lorsque ledit programme est exécuté par un processeur.

## Patentansprüche

1. Übertragungsverfahren zur Übertragung eines IP-Pakets von einer ersten Knotenvorrichtung an eine zweite Knotenvorrichtung, die zu einer Netzwerkumgebung der ersten Knotenvorrichtung gehört, wobei die erste und zweite Knotenvorrichtung zu einem Stromversorgungsnetz gehören und dazu ausgebildet sind, das IP-Paket über Powerline und über Funkfrequenzen zu übertragen, wobei eine Verwendung der Übertragung über Funkfrequenzen an jeder Knotenvorrichtung auf eine maximale Nutzungszeit, macDutyCycleLimit_RF, über ein gleitendes Zeitfenster begrenzt ist, wobei das Übertragungsverfahren **dadurch gekennzeichnet ist, dass** es die folgenden Schritte umfasst, die von der ersten Knotenvorrichtung durchgeführt werden, falls das IP-Paket nicht fragmentiert ist:
- Übertragen (S100, S102) des IP-Pakets über Funkfrequenzen, falls ein Auslastungsgrad, macDutyCycleUsage_RF, durch die erste Knotenvorrichtung, der Übertragung über Funkfrequenzen, der über das gleitende Zeitfenster im Verhältnis zur maximalen Nutzungszeit berechnet wird, niedriger als eine erste Schwelle ist, wobei die erste Schwelle niedriger als eine zweite Schwelle, macDutyCycleThreshold_RF, ist, jenseits welcher jegliche Übertragung über Funkfrequenzen unterbrochen wird;
- anderenfalls Übertragen (S100, S104) des IP-Pakets über Powerline, und, falls die Übertragung über Powerline fehlschlägt, Übertragen (S106, S108) des IP-Pakets über Funkfrequenzen, falls der Auslastungsgrad, macDutyCycleUsage_RF, niedriger als die zweite Schwelle, macDutyCycleThreshold_RF, ist.

2. Übertragungsverfahren nach Anspruch 1, ferner umfassend die folgenden Schritte, die von der ersten Knotenvorrichtung durchgeführt werden, falls das IP-Paket in eine Mehrzahl von Fragmenten fragmentiert ist, die wenigstens ein erstes und zweites Fragment umfasst:
- Übertragen (S200, S202) der Fragmente der Mehrzahl von Fragmenten über Powerline, falls der Auslastungsgrad, macDutyCycleUsage_RF, höher als eine dritte Schwelle ist, wobei die dritte Schwelle höher als die erste Schwelle und niedriger als die zweite Schwelle ist; und anderenfalls
- Übertragen (S200, S204) des ersten Fragments unter Verwendung eines Kommunikationsmediums von Powerline und Funkfrequenzen und Übertragen des zweiten Fragments unter Verwendung des anderen der Kommunikationsmedien;
- falls zu übertragende Fragmente übrig sind, Wiederholen der folgenden Schritte:
o falls der Auslastungsgrad, macDutyCycleUsage_RF, niedriger als die dritte Schwelle ist und eine Quittierung über ein Kommunikationsmedium empfangen wurde, Übertragen (S206, S208, S214) eines nächsten Fragments der Mehrzahl von Fragmenten unter Verwendung des Kommunikationsmediums, über welches die Quittierung empfangen wurde;
o anderenfalls Übertragen (S206, S208, S212) des nächsten Fragments über Powerline.

3. Verfahren nach Anspruch 1 oder 2, wobei der Auslastungsgrad, macDutyCycleUsage_RF, gleich tps/macDutyCycleLimit_RF*100 ist, wobei macDutyCycleLimit_RF die maximale Nutzungszeit über das gleitende Zeitfenster ist und tps die Nutzungszeit durch die Knotenvorrichtung der Übertragung über Funkfrequenzen über das gleitende Zeitfenster ist.

4. Verfahren nach Anspruch 2, wobei das IP-Paket durch eine Anpassungsunterschicht fragmentiert wird, die das 6LoWPAN-Protokoll beinhaltet.

5. Verfahren nach einem der Ansprüche 1 bis 4, wobei, falls das IP-Paket über Powerline übertragen wird, das IP-Paket auf wenigstens einem Frequenzband übertragen wird, das zu einer Menge von Frequenzbändern gehört, die Folgendes umfasst:
- das Frequenzband CENELEC A;
- das Frequenzband CENELEC B; und
- das Frequenzband FCC oder das Frequenzband ARIB.

6. Verfahren nach einem der Ansprüche 1 bis 4, wobei, falls das IP-Paket über Funkfrequenzen übertragen wird, das IP-Paket auf einem Frequenzband übertragen wird, das von 863 MHz bis 870 MHz reicht.

7. Knotenvorrichtung, die zu einem Stromversorgungsnetz gehört, wobei die Knotenvorrichtung dazu ausgebildet ist, ein IP-Paket über Powerline und über Funkfrequenzen an einen anderen Knoten des Stromversorgungsnetzes zu übertragen, der zu seiner Netzwerkumgebung gehört, wobei eine Verwendung der Übertragung über Funkfrequenzen an der Knotenvorrichtung auf eine maximale Nutzungszeit, macDutyCycleLimit_RF, über ein gleitendes Zeitfenster begrenzt ist, wobei die Knotenvorrichtung **dadurch gekennzeichnet ist, dass** sie Übertragungsmittel (1305, 1306) umfasst, die dazu ausgebildet sind, falls das IP-Paket nicht fragmentiert ist:
- das IP-Paket über Funkfrequenzen zu übertragen, falls ein Auslastungsgrad, macDutyCycleUsage_RF, durch die erste Knotenvorrichtung, der Übertragung über Funkfrequenzen, der über das gleitende Zeitfenster im Verhältnis zur maximalen Nutzungszeit berechnet wird, niedriger als eine erste Schwelle ist, wobei die erste Schwelle niedriger als eine zweite Schwelle, macDutyCycleThreshold_RF, ist, jenseits welcher jegliche Übertragung über Funkfrequenzen unterbrochen wird;
- das IP-Paket anderenfalls über Powerline zu übertragen, und, falls die Übertragung über Powerline fehlschlägt, das IP-Paket über Funkfrequenzen zu übertragen, falls der Auslastungsgrad, macDutyCycleUsage_RF, niedriger als die zweite Schwelle, macDutyCycleThreshold_RF, ist.

8. Knotenvorrichtung nach Anspruch 7, wobei die Übertragungsmittel ferner dazu ausgebildet sind, falls das IP-Paket in eine Mehrzahl von Fragmenten fragmentiert ist, die wenigstens ein erstes und zweites Fragment umfasst:
- die Fragmente der Mehrzahl von Fragmenten über Powerline zu übertragen, falls der Auslastungsgrad, macDutyCycleUsage_RF, höher als eine dritte Schwelle ist, wobei die dritte Schwelle höher als die höher als die erste Schwelle und niedriger als die zweite Schwelle ist; und anderenfalls
- das erste Fragment unter Verwendung eines Kommunikationsmediums von Powerline und Funkfrequenzen zu übertragen und das zweite Fragment unter Verwendung des anderen der Kommunikationsmedien zu übertragen;
- falls zu übertragende Fragmente übrig sind, die folgenden Schritte zu wiederholen:
o falls der Auslastungsgrad, macDutyCycleUsage_RF, niedriger als die dritte Schwelle ist und eine Quittierung über ein Kommunikationsmedium empfangen wurde, Übertragen eines nächsten Fragments der Mehrzahl von Fragmenten unter Verwendung des Kommunikationsmediums, über welches die Quittierung empfangen wurde;
o anderenfalls Übertragen des nächsten Fragments über Powerline.

9. Computerprogrammprodukt, **dadurch gekennzeichnet, dass** es Anweisungen zur Durchführung des Übertragungsverfahrens nach einem der Ansprüche 1 bis 6 bei Ausführung des Programms durch einen Prozessor umfasst.

10. Speichermedium, **dadurch gekennzeichnet, dass** es ein Computerprogramm speichert, das Anweisungen zur Durchführung des Übertragungsverfahrens nach einem der Ansprüche 1 bis 6 bei Ausführung des Programms durch einen Prozessor umfasst.

## Claims

1. A transmission method for transmitting an IP packet from a first node device to a second node device belonging to a network neighbourhood of said first node device, said first and second node devices belonging to an electrical supply network and being configured to transmit said IP packet by powerline and by radio frequency, a use of the transmission by radio frequency being, at each node device, limited to a maximum time of use, macDutyCycleLimit_RF, on a sliding time window, the transmission method being **characterised in that** it comprises the following steps performed by said first node device in the case where said IP packet is not fragmented:
- transmitting (S100, S102) said IP packet by radio frequency in the case where a degree of use, macDutyCycleUsage_RF, by the first node device of the radio frequency transmission calculated on the sliding time window with respect to said maximum use time is below a first threshold, said first threshold being below a second threshold, macDutyCycleThreshold_RF, beyond which any transmission by radio frequency is interrupted;
- transmitting (S100, S104) said IP packet by powerline otherwise, and, in the case where said powerline transmission fails, transmitting (S106, S108) the IP packet by radio frequency in the case where said degree of use, macDutyCycleUsage_RF, is below said second threshold, macDutyCycleThreshold_RF.

2. The transmission method according to claim 1, furthermore comprising the following steps performed by said first node device in the case where said IP packet is fragmented into a plurality of fragments comprising at least first and second fragments:
- transmitting (S200, S202) the fragments of said plurality of fragments by powerline in the case where said degree of use, macDutyCycleUsage_RF, is above a third threshold, said third threshold being above said first threshold and below said second threshold; and otherwise
- transmitting (S200, S204) said first fragment using a communication medium from powerline and radio frequency and transmitting said second fragment using the other one of said communication media;
- in the case where fragments are still to be transmitted, repeating the following steps:
o in the case where said degree of use, macDutyCycleUsage_RF, is below said third threshold and an acknowledgement has been received on a communication medium, transmitting (S206, S208, S214) a next fragment of said plurality of fragments using said communication medium on which said acknowledgement was received;
o transmitting (S206, S208, S212) said next fragment by powerline otherwise.

3. The method according to claim 1 or 2, wherein the degree of use, macDutyCycleUsage_RF, is equal to tps/macDutyCycleLimit_RF*100, where macDutyCycleLimit_RF is said maximum use time on the sliding window and tps is the time of use by the node device of the transmission by radio frequency on the sliding time window.

4. The method according to claim 2, wherein said IP packet is fragmented by an adaptation sub-layer incorporating the 6LoWPAN protocol.

5. The method according to any one of claims 1 to 4, wherein, in the case where the IP packet is transmitted by powerline, said IP packet is transmitted on at least one frequency band belonging to a set of frequency bands comprising:
- the CENELEC A frequency band;
- the CENELEC B frequency band; and
- the FCC frequency band or the ARIB frequency band.

6. The method according to any one of claims 1 to 4, wherein, in the case where the IP packet is transmitted by radio frequency, said IP packet is transmitted on a frequency band ranging from 863 MHz to 870 MHz.

7. A node device belonging to an electrical supply network, said node device being configured to transmit an IP packet by powerline and by radio frequency to another node of said electrical supply network belonging to its network neighbourhood, a use of the transmission by radio frequency being, at each node device, limited to a maximum time of use, macDutyCycleLimit_RF, on a sliding time window, the node device being **characterised in that** it comprises transmission means (1305, 1306) configured to, in the case where said IP packet is not fragmented:
- transmit said IP packet by radio frequency in the case where a degree of use, macDutyCycleUsage_RF, by the first node device of the transmission by radio frequency calculated on the sliding time window with respect to said maximum use time is below a first threshold, said first threshold being below a second threshold, macDutyCycleThreshold_RF, beyond which any transmission by radio frequency is interrupted;
- transmit said IP packet by powerline otherwise, and, in the case where said powerline transmission fails, transmit the IP packet by radio frequency in the case where said degree of use, macDutyCycleUsage_RF, is below said second threshold, macDutyCycleThreshold_RF.

8. The node device according to claim 7, wherein said transmission means are furthermore configured to, in the case where said IP packet is fragmented into a plurality of fragments comprising at least first and second fragments:
- transmit the fragments of said plurality of fragments by powerline in the case where said degree of use, macDutyCycleUsage_RF, is above a third threshold, said third threshold being above said first threshold and below said second threshold; and otherwise
- transmit said first fragment using a communication medium from powerline and radio frequency and transmitting said second fragment using the other one of said communication media;
- in the case where fragments are still to be transmitted, repeat the following steps:
o in the case where said degree of use, macDutyCycleUsage_RF, is below said third threshold and an acknowledgement has been received on a communication medium, transmitting a next fragment of said plurality of fragments using said communication medium on which said acknowledgement was received;
o transmitting said next fragment by powerline otherwise.

9. A computer program product **characterised in that** it comprises instructions for implementing the transmission method according to any one of claims 1 to 6, when said program is executed by a processor.

10. A storage medium **characterised in that** it that stores a computer program comprising instructions for implementing the transmission method according to any one of claims 1 to 6, when said program is executed by a processor.
